# EUROPÄISCHE PATENTANMELDUNG

(11) **EP 2 626 677 A2**
(43) Veröffentlichungstag der Anmeldung: **14.08.2013**
(21) Anmeldenummer: 13154729.1
(22) Anmeldetag: 08.02.2013
(51) Int. Cl.: G01G 19/44, G01G 21/23

(54) **Personenwaage**

(30) Priorität: 08.02.2012 DE 102012101033
(71) Anmelder: Leifheit AG, 56377 Nassau (DE)
(72) Erfinder: Denk, Andre, 45131 Essen (DE); Hentze, Julian, 33104 Paderborn (DE)
(74) Vertreter: Bungartz, Klaus Peter

(57) **Zusammenfassung**

Die Erfindung betrifft eine Personenwaage mit einer Tragplatte (1) mit einem mittleren Bereich und neben, unterhalb und oberhalb des mittleren Bereichs angeordneten Seitenbereichen, einem Unterboden (5), auf dessen Innenseite sich die Tragplatte (1) über Wägezellen abstützt.

Die bekannten Personenwaagen mit einem als Unterschale ausgebildeten Unterboden haben den Nachteil, dass sie bei Untergründen in Form von Teppichböden oder unebenen Fliesenbelägen mittig aufsetzen oder dass die Wägezellen ungleichmäßig belastet wird, was beides zu Messungenauigkeiten führen kann. Dies verbessert die Erfindung dadurch, dass der Unterboden (5) derart ausgebildet ist, dass er sich unter Freilassen des unter dem mittleren Bereich (3) der Tragplatte (1) angeordneten Raums zumindest unterhalb derjenigen Teilbereiche der Seitenbereiche (2) erstreckt, unter denen die Wägezellen angeordnet sind.

## Beschreibung

Die Erfindung betrifft eine Personenwaage mit einer Tragplatte zur Aufnahme eines zu wiegenden Gewichtes mit einem mittleren Bereich und neben, unterhalb und oberhalb des mittleren Bereichs angeordneten Seitenbereichen, einem Unterboden, auf dessen Innenseite sich die Tragplatte über zumindest drei, im Abstand zueinander angeordnete Wägezellen abstützt, und mit einer Auswerteelektronik, die die auf die Wägezellen einwirkende Belastung auszuwerten, in das zu wiegende Gewicht umzurechnen und über eine Anzeigevorrichtung auszugeben vermag. Hierbei sind die Wägezellen innerhalb von zumindest zwei, der außerhalb des mittleren Bereichs der Tragplatte angeordneten Seitenbereichen der Tragplatte, üblicherweise in den vier Ecken, angeordnet.

Derartige Waagen sind derzeit mit einer elastischen Unterschale als Unterboden versehen. Eine solche Konstruktion ist aus der DE 10 2010 011 032 A1 bekannt. Auch die WO 95/31700 A1 zeigt eine solche Waage.

Als Wägezelle werden hierbei oft flache Wägezellen, sogenannte Planarwägezellen verwendet, wie sie in den oben genannten Schriften, aber auch in der EP 0 505 493 B1, hier insbesondere in der Figur 3 und der zugehörigen Beschreibung, offenbart sind. Planarwägezellen im Sinne dieser Beschreibung sind Wägezellen, die aus einem gestanzten oder ausgeschnittenen Blechabschnitt bestehen und mit einem inneren Bereich an einer Seite der Waage (z.B. der Lastseite) und einem äußeren Bereich mit der anderen Seite (z.B. der lastaufnehmenden Seite) verbunden sind, wobei die Verbiegung des inneren Bereichs relativ zum äußeren Bereich ausgewertet und über die Anzeigevorrichtung dem Benutzer angezeigt wird. Dabei muss die Anzeigevorrichtung nicht zwangsläufig in der Tragplatte oder dem Unterboden angeordnet sein, auch eine Datenfernübertragung mit separater Anzeigevorrichtung ist möglich.

Diese flachen Waagen mit Untergehäuse haben den Nachteil, dass es infolge eine Kraftschlusses bei Aufsetzen des Unterbodens auf den Untergrund zu Beeinflussungen der Messung kommen kann, sofern der Unterboden nicht hinreichend weit von der Tragplatte entfernt ist, was aber dem Bedürfnis nach einem flachen Design zuwider läuft, oder nicht hinreichend massiv ausgeführt ist, was aber wiederum zu erhöhten Herstellungskosten führt.

Ein weiterer Nachteil besteht darin, dass sich der Unterboden ungleichmäßig verformen kann, insbesondere, wenn die Belastung durch außermittiges Belasten oder ungleichmäßige Standflächen üblicherweise ungleichmäßig ist. Dies führt zu einem Biegemoment in dem Unterboden, das wiederum auf die Wägezellen übertragen wird und zu Messungenauigkeiten führen kann.

Eine weitere, aus der WO 2008/009794 A1 bekannte Variante der Personenwaage verwendet Wägezellen, die sich unmittelbar über kleine Standfüße auf dem Untergrund abstützen. Hier ist entweder ein durchgängiger Unterboden vorgesehen, der im Bereich der Standfüße Durchgangsöffnungen aufweist, so dass die Standfüße durch den Untergrund hindurchgeführt sind oder es sind kleiner Abdeckungen vorgesehen, die den Bereich der Wägezellen abdecken, aber im wesentlichen ebenfalls Durchlässe aufweisen, durch die die Wägezellen hindurchgeführt sind.

Im Prinzip unterscheidet sich allerdings diese Form des Unterbodens kaum von der durchgängigen Form, in allen Fällen können ebenfalls Planarwägezellen, wie in der WO 2008/009794 A1 beschrieben, oder klassische Wägezellen verwendet werden, die aus einem Biegebalken bestehen, der mit einem Ende an der Tragplatte und dem gegenüberliegenden Ende an dem Standfuß befestigt ist. Letztere Wägezellen sind vergleichsweise massiv und erlauben im Gegensatz zur Planarwägezelle keine leichte Bauweise mit dünnem Gesamtaufbau. Unabhängig von der verwendeten Art der Wägezelle besteht aber bei dieser zweiten Variante das Risiko eines Messfehlers, wenn der Untergrund uneben ist, Ferner müssen die Wägezellen über zusätzliche Bauteile mit der Tragplatte verbunden oder, wie in dem oben genannten Dokument beschrieben, an dem Unterboden gelagert werden.

Aufgabe der Erfindung ist daher, eine möglichst schlicht zu gestaltende, preisgünstig herstellbare Waage der erstgenannten Variante mit durchgängigem Unterboden zu schaffen, die ein möglichst zuverlässiges Wiegeergebnis erzielt.

Diese Aufgabe wird erfindungsgemäß dadurch gelöst, dass die Wägezellen an zumindest zwei, neben einem mittleren Bereich der Tragplatte angeordneten Seitenbereichen der Traglatte angeordnet sind und der Unterboden derart ausgebildet ist, dass er sich unter Umgehung des mittleren Bereichs der Tragplatte zumindest unter den Teilbereichen der Seitenbereiche erstreckt unter denen die Wägezellen angeordnet sind.

Erfindungsgemäß wird nun weiterhin ein Unterboden für eine Waage verwendet, bei dem der Einsatz von flachen Wägezellen, den oben beschriebenen Planarwägezellen, ohne zusätzliche Lagerung auf einfache Weise möglich ist, da sich diese Planarwägezellen weiterhin nur mit einer Seite auf der Innenseite des Unterbodens abstützen und sich die Tragplatte direkt auf die belastete Seite abstützen kann. Dies kann alleine durch die Formgebung der verwendeten Bauteile realisiert werden.

Allerdings ist die Erfindung nicht auf die Verwendung dieser speziellen Wägezellen eingeschränkt. Durch die Verwendung dieses Unterbodens kann die erfindungsgemäße Lage weiterhin flach gehalten bleiben, so dass nach wie vor die Optik attraktiv bleiben kann.

Zur Erhöhung der Genauigkeit des Wiegevorgangs wird nun jedoch der Unterboden speziell gestaltet. Während bei den bekannten Waagen der Unterboden nahezu den gesamten Bereich der Tragplatte von unten abdeckte, wird nun ein Unterboden verwendet, der den mittleren Bereich der Waage von unten gesehen nicht abdeckt. Das heißt, dass sich der Unterboden nur über die Seitenbereiche oder Teile hiervon erstreckt. Wie groß der mittlere Bereich sein muss, damit die erfindungsgemäße Erhöhung der Wiegegenauigkeit eintritt, hängt von der Beschaffenheit des Untergrundes sowie der Elastizität des Unterbodens ab.

Üblicherweise wird die erfindungsgemäße Waage so ausgelegt, dass sie bei den regelmäßig in einem Haushalt vorkommenden Unebenheiten eine hinreichende Genauigkeit erzielt. Dies ist dann gegeben, wenn die Möglichkeit eines Kraftschlusses zwischen dem nicht ebenen Untergrund und der Tragplatte durch Hochdrücken des elastischen Unterbodens bis hin zur Unterseite der Tragplatte reduziert oder optimaler Weise sogar ausgeschlossen ist.

Aus diesen Anforderungen ergibt sich, dass der mittlere Bereich möglichst groß gehalten werden sollte, andererseits muss der verbleibende Unterboden ausreichend groß sein, um die Wägezellen aufnehmen zu können. Zusätzlich wird meist in einem Bereich des Unterbodens die Auswerteelektronik sowie die Anzeigevorrichtung angeordnet sein, damit diese von unten vom Unterboden mit abgedeckt werden kann. Bereichsgrößen, bei denen der erfindungswesentliche Vorteil eintritt, sind zum Beispiel dadurch gekennzeichnet, dass der freibleibende mittlere Bereich etwa 30-70 % der Fläche der Tragplatte ausmacht.

Die Form des Unterbodens kann einstückig sein, so dass der Unterboden im Querschnitt zum Beispiel die Form eines "U" oder eines Kreisrings mit einer im mittleren Bereich durchgängigen Ausnehmung aufweisen kann. Ferner kann der Unterboden auch mehrteilig ausgebildet sein, in diesem Fall kann zum Beispiel im Bereich einer vorderen Anzeigevorrichtung ein erster Teil des Unterbodens von einer Seite zur gegenüberliegenden Seite der Tragplatte, gegebenenfalls unter Belassung eines äußeren Randes, verlaufen. In diesem ersten Teil des Unterbodens können dann die Anzeigevorrichtung und die Auswerteelektronik sowie eine eventuell notwendige Energieversorgung angeordnet sein. Im hinteren Bereich, also dem Bereich, der dem Benutzer, der auf die Waage tritt, in der Regel zugewandt sein wird, kann der Unterboden dann mit einem oder weiteren Teilen ausgebildet sein, beispielsweise kann auch hier ein quer verlaufener zweiter Teil vorgesehen sein oder es ist für jede an den Ecken angeordnete Wägezelle jeweils ein separater Teil des Unterbodens in Form eines Einzelgehäuses vorgesehen.

Wichtig ist, dass der Unterboden oder die Teile des Unterbodens auf die Seitenbereiche beschränkt bleiben. Ferner wird erfindungsgemäß an dem Konzept festgehalten, dass sich die Wägezellen auf der Innenfläche des Unterbodens abstützen.

Ein weiterer zusätzlicher Aspekt der Erfindung, der die Messgenauigkeit weiter erhöht, ist eine zusätzliche Verstärkung des Unterbodens als Krafteinleitungsbereich im Bereich unterhalb der Wägezellen. Es hat sich nämlich gezeigt, dass durch eine Verbiegung des Unterbodens die Wägezellen zusätzlich zur senkrecht einwirkenden Gewichtskraft mit einem Biegemoment beaufschlagt werden. Diese Doppelbelastung lässt sich jedoch schwer voneinander trennen und in ein zuverlässiges Messergebnis umrechnen, so dass hierdurch zusätzliche Messunsicherheiten entstehen.

Der Krafteinleitungsbereich ist erfindungsgemäß so ausgebildet, dass sie dem Biegemoment infolge der Personenlast entgegenwirkt. Hierzu kann die Verstärkung als nach innen und/oder außen gerichteter Dickensprung der Wandstärke des Bodens oder als separates Bauteil, dass von innen oder außen auf den Bodeneinwirkt, ausgebildet sein. Die Verstärkung kann so geformt sein, dass sie auf die Richtung des erwarteten Biegemoments optimiertist.

Zusätzlich hat der Krafteinleitungsbereich die Wirkung, dass die Kräfte auf die Wägezellen fokussiert werden, so dass sich eine höhere Genauigkeit der Wiegeergebnisse erzielen lässt. Überraschenderweise ist hierfür nicht notwendig, dass die Waage den Unterboden in der Mitte gar nicht berührt, also die Verstärkung des Krafteinleitungsbereichs so groß ist, dass kein Kontakt zu einem weichen Boden mehr besteht, wie dies bei klassischen Waagen ohne durchgehenden Unterboden der Fall wäre, bei denen sich die Wägezellen direkt auf dem Boden abstützen.

Die Waage wird üblicherweise über zwei Füße belastet, die eine innerhalb der Wägezellen und damit der Punkte, an denen sich der elastische Untergrund auf dem Boden abstützt, angeordnete Flächenlast aufbringen. Hierdurch wird der Unterboden in der Mitte nach unten gedrückt, so dass sich die Bodenplatte entsprechend deformiert. Das bedeutet, die Verstärkung des Krafteinleitungsbereichs muss in der Lage sein, dieser Deformation entgegenzuwirken, sich also zum Beispiel mit einem Bereich nach innen in Richtung des mittleren Bereichs erstrecken.

Selbstverständlich können auch alle anderen Möglichkeiten einer Biegeunterdrückung verwendet werden, etwa eingebrachte Sicken oder aufgebrachte, etwa radial nach innen verlaufende Verstärkungsstreben. Wenn die Verstärkung von innen auf dem Unterboden aufgebracht ist, können sich die Wägezellen bevorzugt auf der Verstärkungsplatte abstützen, wobei dies nicht unbedingt erforderlich ist.

Der Krafteinleitungsbereich hat den Vorteil, dass zwar nicht die die Deformation des gesamten Unterbodens verhindert wird, jedoch eine Deformation im Bereich der Wägezellen unterdrückt wird. Hierdurch ist ein Kraftschluss im Bereich der Wägezellen verhindert, der das Messeergebnis verfälschen würde. Eine mögliche Verstärkung für den Krafteinleitungsbereich besteht aus einer Verdickung des Unterbodens, die zum Beispiel elliptisch ausgebildet ist und sich mit der längeren Hauptachse der Ellipse radial, zum Beispiel um 5mm bis 50mm nach innen erstreckt, wobei die Länge von der Elastizität des Unterbodens und der Verstärkung bestimmt ist. Alternativ kann auch eine kreisförmige Verstärkung gewählt werden, die konzentrisch oder dezentral zur Wägezelle im Bereich der Wägezellen vorgesehen sein kann.

Weitere Merkmale und Vorteile der Erfindung ergeben sich aus den Unteransprüchen und aus der nachfolgenden Beschreibung eines bevorzugten Ausführungsbeispiels anhand der Zeichnungen.

In den Zeichnungen zeigt:
- Figur 1: eine erfindungsgemäße Personenwaage in einer perspektivischen Ansicht von oben,
- Figur 2: eine erste Ausgestaltung einer erfindungsgemäße Personenwaage in einer schematischen Ansicht von unten und

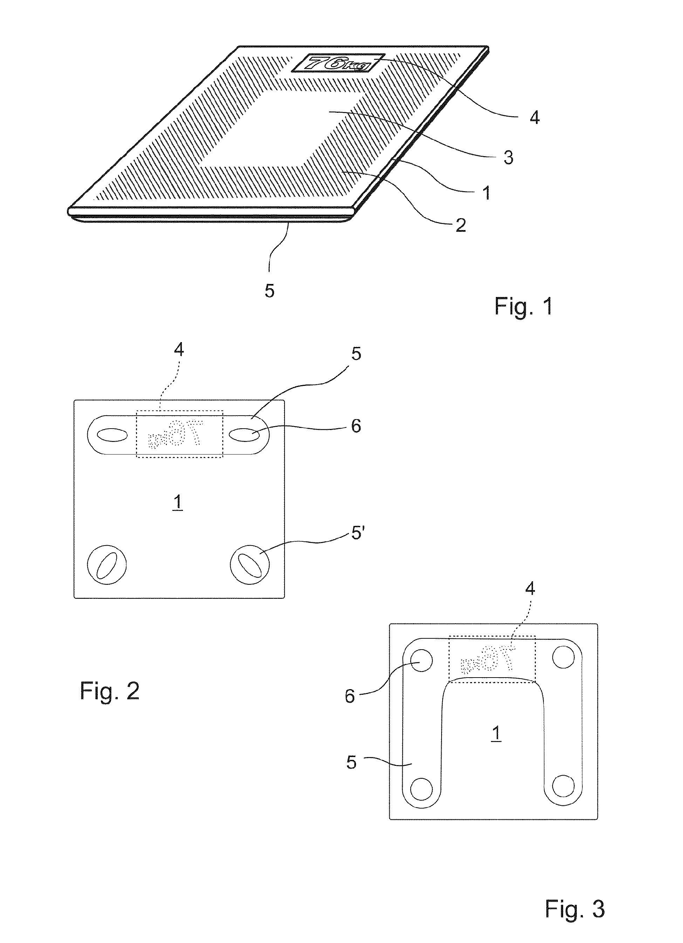

- Figur 2: eine weitere Ausgestaltung einer erfindungsgemäßen Personenwaage in einer schematischen Ansicht von unten.

In Figur 1 ist eine erfindungsgemäße Waage als Personenwaage dargestellt. Die Personenwaage weist eine Tragplatte 1 auf, die einen mittleren Bereich 3 sowie Seitenbereiche 2 besitzt. Die Form des Unterbodens 5, der als Schale mit inneren Wägezellen ausgebildet ist, ist aus Figur 2 erkennbar, in der ein erstes Ausführungsbeispiel gezeigt ist.

Der Unterboden 5 erstreckt sich hier nur über den Seitenbereich 2, der mittlere Bereich 3 bleibt dagegen von unten gesehen frei. Hierzu ist der Unterboden 5 U-förmig ausgebildet, so dass er einen Querbereich sowie zwei sich längs der Seiten der Tragplatte 1 erstreckende Längsbereiche aufweist. Ob der Querbereich vorne oder hinten angeordnet ist, ist für die technische Funktion der erfindungsgemäßen Personenwaage nicht relevant.

Im Bereich der Wägezellen sind hier Verstärkungen als Krafteinleitungsbereich 6 vorgesehen, die hier elliptisch ausgebildet sind. Die Wägezellen sind oberhalb des äußeren Brennpunktes angeordnet, von hier aus erstrecken sich die elliptischen Dickenverstärkungen nach innen in Richtung des mittleren Bereichs 3.

In Figur 3 ist eine zweite Ausgestaltung einer erfindungsgemäßen Personenwaage dargestellt. Hier sind auch die Seitenbereiche 2 teilweise freigelassen, da sich der Unterboden 5 hier aus drei Teilelementen zusammensetzt. Ein vorderer Bereich unterhalb der Anzeigevorrichtung 4 beinhaltet zwei Wägezellen sowie die Auswerteelektronik.

Dieser vordere Bereich erstreckt sich von links nach rechts. Im hinteren Bereich ist der Unterboten 5 von zwei Teilelementen 5' gebildet, die im Wesentlichen eine zylindrische Form aufweisen und jeweils eine Wägezelle beherbergen.

Bei der in Figur 3 gezeigten Ausgestaltung ist an der Unterseite des Unterbodens 5, jeweils im Bereich einer Wägezelle, eine Verstärkung als Krafteinleitungsbereich 6 vorgesehen, die hier die Form einer Kreisscheibe aufweist und konzentrisch zur Wägezelle angeordnetist. Diese Verstärkung kann, nicht nur in der gezeigten Variante, zusätzlich einen Abstand um Untergrund bewirken, auf dem die Personenwaage aufsteht.

### Bezugszeichenliste:

- 1: Tragplatte
- 2: Seitenbereich der Personenwaage
- 3: Mittlerer Bereich der Personenwaage
- 4: Anzeigevorrichtung
- 5: Unterboden
- 6: Krafteinleitungsbereich

## Patentansprüche

1. Personenwaage mit
● einer Tragplatte (1) zur Aufnahme eines zu wiegenden Gewichtes mit einem mittleren Bereich und neben, unterhalb und oberhalb des mittleren Bereichs angeordneten Seitenbereichen,
● einem Unterboden (5), auf dessen Innenseite sich die Tragplatte (1) über zumindest drei, im Abstand zueinander angeordnete Wägezellen abstützt, und
● mit einer Auswerteelektronik, die die auf die Wägezellen einwirkende Belastung auszuwerten, in das zu wiegende Gewicht umzurechnen und über eine Anzeigevorrichtung (4) auszugeben vermag,
wobei die Wägezellen innerhalb von zumindest zwei, der außerhalb des mittleren Bereichs (3) der Tragplatte (1) angeordneten Seitenbereiche (2) der Tragplatte (1) angeordnet sind, **dadurch gekennzeichnet, dass**
der Unterboden (5) derart ausgebildet ist, dass er sich unter Freilassen des unter dem mittleren Bereich (3) der Tragplatte (1) angeordneten Raums zumindest unterhalb derjenigen Teilbereiche der Seitenbereiche (2) erstreckt, unter denen die Wägezellen angeordnet sind.

2. Personenwaage nach Anspruch 1, **dadurch gekennzeichnet, dass** der Unterboden (5) vom mehreren, räumlich voneinander getrennten Bodenelementen gebildet ist, wobei jedes dieser Bodenelemente zumindest eine Wägezelle trägt, auf der sich ein Seitenbereich (2) der Tragplatte (1) ganz oder teilweise abstützt.

3. Personenwaage nach Anspruch 2, **dadurch gekennzeichnet, dass** im Bereich zweier Ecken zumindest eines Seitenbereichs (2) jeweils ein hinteres Bodenelement vorgesehen ist, das jeweils eine Wägezelle abstützt.

4. Personenwaage nach Anspruch 2 oder 3, **dadurch gekennzeichnet, dass** ein vorderes Bodenelement vorgesehen ist, das sich längs eines vorderen Seitenbereichs (2) erstreckt und an seinen äußeren Ecken jeweils eine Wägezelle abstützt.

5. Personenwaage nach Anspruch 1, **dadurch gekennzeichnet, dass** der Unterboden U-förmig ausgebildet ist, wobei im Bereich der Enden der Schenkel des U-förmigen Unterbodens (5) jeweils eine Wägezelle angeordnetist, während im gegenüber liegenden Bereich des Unterbodens (5) zwei im Abstand zueinander angeordnete Wägezellen angeordnet sind, zwischen denen die Anzeigevorrichtung (4) vorgesehen ist.

6. Personenwaage nach einem der vorhergehenden Ansprüche, **dadurch gekennzeichnet, dass** der Unterboden (5) zumindest abschnittsweise derart elastisch ausgebildet ist, dass er sich aufgrund des Gewichts einer Normperson, insbesondere eines Gewichts zwischen 30kg und 120kg im Bereich der maximalen Verformung um 2mm bis 5mm zu verformen vermag.

7. Personenwaage nach einem der vorhergehenden Ansprüche, **dadurch gekennzeichnet, dass** der Unterboden (5) im Bereich der Verbindung mit den Wägezellen wenigstens einen Krafteinleitungsbereich (6) aufweist, der derart ausgebildet ist, dass er eine Durchbiegung des Unterbodens (5) im Nahbereich der Wägezelle zumindest bis zu einer Belastung von bis zu 120kg zu verringern oder zu verhindern vermag.

8. Personenwaage nach dem vorhergehenden Anspruch, **dadurch gekennzeichnet, dass** der Krafteinleitungsbereich (6) von einer auf der Unterseite des Unterbodens angeordneten Tragplatte (1) gebildet ist, die eine eine Dicke von 1mm bis 5mm aufweist sowie insbesondere integraler Teil des Bodens ist.

9. Personenwaage nach einem der beiden dem vorhergehenden Ansprüche, **dadurch gekennzeichnet, dass** der Krafteinleitungsbereich (6) von einer integralen oder als separates Bauteil aufgebrachten Verdickung auf der Innen- oder Außenseite des Unterbodens (5) gebildet ist, die derart geformt ist, dass sie einem durch das auf der Tragplatte stehendes Gewicht auf den Unterboden wirkendes Biegemoment entgegenwirkt, wobei die Verstärkung sich hierzu insbesondere nach innen, in Richtung des mittleren Bereichs über die Wägezelle, insbesondere um eine Distanz von 5 bis zumindest 50mm erstreckt.

10. Personenwaage nach einem der vorhergehenden Ansprüche, **dadurch gekennzeichnet, dass** der Krafteinleitungsbereich (6) länglich mit elliptischer oder rechteckiger Form ausgebildet ist, wobei sich die Längsachse in Richtung der Mitte des Bodens erstreckt und die Wägezelle sich außerhalb der Mitte des der Krafteinleitungsbereichs (6) auf den Boden abstützt, so dass sich der der Krafteinleitungsbereich (6) von der Wägezelle mit einem Verstärkungs- und Hebelbereich nach innen zur Mitte des Bodens hin erstreckt.

11. Personenwaage nach einem der vorhergehenden Ansprüche, **dadurch gekennzeichnet, dass** die Wägezellen Planarwägezellen sind, die mit einem äußeren Bereich an der Tragplatte (1) und mit einem inneren Bereich an dem Unterboden (5) oder mit einem inneren Bereich an der Tragplatte (1) und mit einem äußeren Bereich an dem Unterboden (5) befestigt sind, wobei im Bereich der Verbindung des äußeren Bereichs mit dem inneren Bereich Dehnungsmessstreifen vorgesehen sind, deren Dehnung von der Auswerteelektronik zur Bestimmung der Belastung auswertbar ist.
